# EUROPEAN PATENT APPLICATION

(11) **EP 4 563 398 A1**
(43) Date of publication of application: **04.06.2025**
(21) Application number: 24207085.2
(22) Date of filing: 17.10.2024
(51) Int. Cl.: B60L 15/20

(54) **VEHICLE MANAGEMENT SYSTEM AND BATTERY ELECTRIC VEHICLE**

(30) Priority: 16.11.2023 JP 2023195092
(71) Applicant: TOYOTA JIDOSHA KABUSHIKI KAISHA, Aichi-ken, 471-8571 (JP)
(72) Inventor: UCHIDA, Takahiro, TOYOTA-SHI, AICHI-KEN, 471-8571 (JP); ARAKAWA, Seiji, TOYOTA-SHI, AICHI-KEN, 471-8571 (JP); SAKAI, Kazuhito, TOYOTA-SHI, AICHI-KEN, 471-8571 (JP); FUKUHARA, Chie, TOYOTA-SHI, AICHI-KEN, 471-8571 (JP)
(74) Representative: Cabinet Beau de Loménie

(57) **Abstract**

A vehicle management system (100) is applied to a battery electric vehicle (10). The battery electric vehicle (10) includes a simulation mode in which a simulation target is simulated. The simulation target includes at least either of a driving sound of a virtual mobile body and driving characteristics of a virtual vehicle. The vehicle management system (100) includes one or more processors (101). The one or more processors (101) are configured to calculate driving proficiency of a driver that drives the battery electric vehicle (10) in the simulation mode. The one or more processors (101) are configured to change options for the simulation target according to the driving proficiency.

## Description

### 1. Field of the Invention

The present disclosure relates to a battery electric vehicle that uses an electric motor as a power unit for travel, and to a vehicle management system to be applied to the battery electric vehicle.

### 2. Description of Related Art

Japanese Patent No. 6787507 discloses a battery electric vehicle that can reproduce manual shifting operation of a manual transmission vehicle (MT vehicle) in a pseudo manner.

### SUMMARY OF THE INVENTION

According to the technology described in Patent No. 6787507, it is possible to reproduce (simulate) driving characteristics of the MT vehicle (torque characteristics with manual shifting gears) and an engine sound of the MT vehicle. However, the document does not mention a system in which options for a simulation target are changed according to a specific index.

The present disclosure provides a vehicle management system and a battery electric vehicle in which options (a driving sound or driving characteristics) that can be simulated are changed.

A first aspect of the present disclosure provides a vehicle management system to be applied to a battery electric vehicle configured to use an electric motor as a power unit for travel. The battery electric vehicle includes a simulation mode in which a simulation target is simulated. The simulation target includes at least either of a driving sound of a virtual mobile body and driving characteristics of a virtual vehicle. The vehicle management system includes one or more processors. The one or more processors are configured to calculate driving proficiency of a driver that drives the battery electric vehicle in the simulation mode. The one or more processors are configured to change options for the simulation target according to the driving proficiency.

In the vehicle management system according to the first aspect of the present disclosure, the one or more processors may be configured to increase the options for the simulation target as the driving proficiency becomes higher.

In the vehicle management system according to the first aspect of the present disclosure, the simulation target may include the driving sound of the virtual mobile body. The one or more processors may be configured to generate a pseudo drive sound that simulates the drive sound of the virtual mobile body. The one or more processors may be configured to output the pseudo driving sound through a speaker mounted on the battery electric vehicle.

In the vehicle management system according to the first aspect of the present disclosure, the pseudo driving sound of the virtual mobile body may be a pseudo engine sound that simulates an engine sound of an engine-driven automobile.

In the vehicle management system according to the first aspect of the present disclosure, the driving proficiency may be calculated based on at least one of a duration of use of the simulation mode, a distance of travel in the simulation mode, and a frequency of use of the simulation mode.

In the vehicle management system according to the first aspect of the present disclosure, the simulation target may include the driving characteristics of the virtual vehicle. The driving characteristics of the virtual vehicle may be torque characteristics of a manual transmission (MT) vehicle. The simulation mode may include a manual mode in which the torque characteristics of the MT vehicle are simulated.

In the vehicle management system according to the first aspect of the present disclosure, The battery electric vehicle may include an accelerator pedal and a sequential shifter. The battery electric vehicle may be configured to vary output characteristics of the electric motor for an operation of the accelerator pedal according to a shift operation of the sequential shifter in the manual mode.

In the vehicle management system according to the first aspect of the present disclosure, the battery electric vehicle may include an accelerator pedal, a pseudo clutch pedal, and a pseudo shift device. The pseudo clutch pedal may be operated when operating the pseudo shift device. The battery electric vehicle may be configured to vary an output of the electric motor for an operation of the accelerator pedal according to an operation of the pseudo clutch pedal and an operation of the pseudo shift device in the manual mode.

In the vehicle management system according to the first aspect of the present disclosure, the driving proficiency may be calculated based on at least one of a duration of use of the manual mode, a distance of travel in the manual mode, a frequency of use of the manual mode, and a number of shift operations in the manual mode.

In the vehicle management system according to the first aspect of the present disclosure, the one or more processors may be configured to select one specified by the driver, from among the options for the simulation target.

A second aspect of the present disclosure provides a battery electric vehicle configured to use an electric motor as a power unit for travel. The battery electric vehicle includes one or more processors. The one or more processors are configured to simulate a simulation target that includes at least either of a driving sound of a virtual mobile body and driving characteristics of a virtual vehicle in a simulation mode. The one or more processors are configured to calculate driving proficiency of a driver that drives the battery electric vehicle in the simulation mode. The one or more processors are configured to change options for the simulation target according to the driving proficiency.

According to the present disclosure, the battery electric vehicle includes a simulation mode in which a driving sound of a virtual mobile body or driving characteristics of a virtual vehicle as a simulation target are simulated. Then, options for the simulation target are changed according to driving proficiency of a driver. The driver can have further fun when options for the simulation target are changed. This is expected to encourage more drivers to choose battery electric vehicles, proliferating the battery electric vehicles in society. The battery electric vehicles do not emit greenhouse gases such as carbon dioxide during travel, and therefore the proliferation of the battery electric vehicles may contribute to the realization of a low-carbon society. In other words, the vehicle management system that changes options for the simulation target in the simulation mode may contribute to the proliferation of the battery electric vehicles, and hence to the realization of a low-carbon society.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a conceptual diagram illustrating a battery electric vehicle and a vehicle management system;
FIG. 2 is a block diagram illustrating an example of the functional configuration of the vehicle management system;
FIG. 3 is a block diagram illustrating another example of the functional configuration of the vehicle management system;
FIG. 4 is a conceptual diagram illustrating an overview of sound management based on driving proficiency;
FIG. 5 is a block diagram illustrating an example of the functional configuration of the vehicle management system;
FIG. 6 is a conceptual diagram illustrating an overview of driving characteristic management based on driving proficiency;
FIG. 7 is a block diagram illustrating an example of the functional configuration of the vehicle management system;
FIG. 8 is a conceptual diagram illustrating an overview of vehicle management based on driving proficiency;
FIG. 9 is a block diagram illustrating an in-vehicle device and a management server;
FIG. 10 is a block diagram illustrating a first example of the operation mode of the vehicle management system;
FIG. 11 is a block diagram illustrating a second example of the operation mode of the vehicle management system;
FIG. 12 is a block diagram illustrating a third example of the operation mode of the vehicle management system;
FIG. 13 is a block diagram illustrating a fourth example of the operation mode of the vehicle management system;
FIG. 14 is a block diagram illustrating a first example of the configuration of a power control system of the battery electric vehicle;
FIG. 15 illustrates respective examples of an engine model, a clutch model, and a transmission model that constitute a manual transmission (MT) vehicle model;
FIG. 16 illustrates torque characteristics of an electric motor achieved through motor control performed using the MT vehicle model; and
FIG. 17 is a block diagram illustrating a second example of the configuration of the power control system of the battery electric vehicle.

### DETAILED DESCRIPTION OF EMBODIMENTS

An embodiment of the present disclosure will be described with reference to the accompanying drawings.

### 1. Battery Electric Vehicle and Vehicle Management System

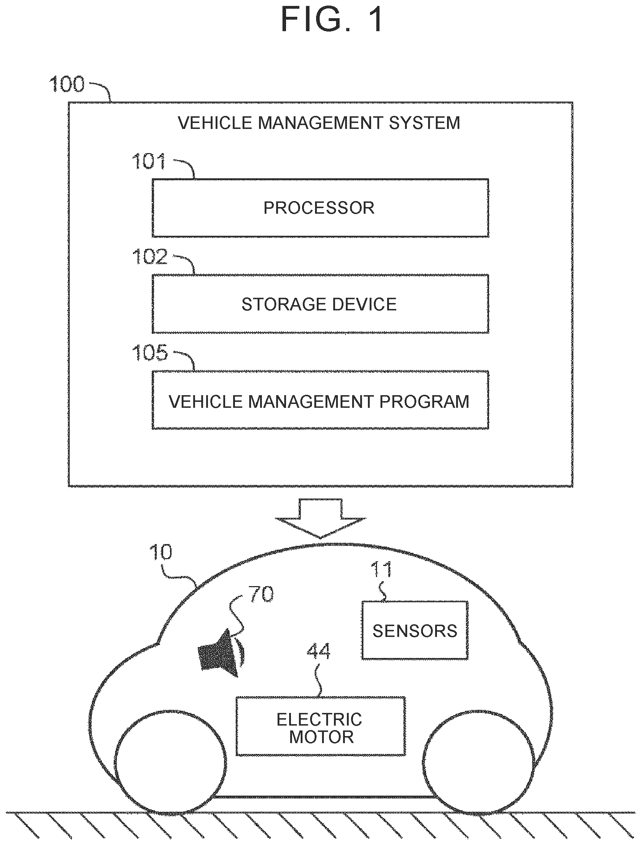

FIG. 1 is a conceptual diagram illustrating a battery electric vehicle 10 and a vehicle management system 100 according to the present embodiment. The battery electric vehicle 10 includes an electric motor 44. The electric motor 44 may be a brushless direct-current (DC) motor or a three-phase alternating-current (AC) synchronous motor, for example. The battery electric vehicle 10 uses the electric motor 44 as a power unit for travel.

The battery electric vehicle 10 also includes various sensors 11. The various sensors 11 detect the driving state of the battery electric vehicle 10. Examples of the various sensors 11 include an accelerator position sensor, a brake position sensor, a steering angle sensor, a steering torque sensor, a wheel speed sensor, an acceleration sensor, a rotational speed sensor, a position sensor, and a recognition sensor. The accelerator position sensor detects the operation amount of an accelerator pedal. The brake position sensor detects the operation amount of a brake pedal. The steering angle sensor detects the steering angle of a steering wheel. The steering torque sensor detects steering torque of the steering wheel. The wheel speed sensor detects the rotational speed of a wheel of the battery electric vehicle 10. The acceleration sensor detects the lateral acceleration and the front-rear acceleration of the battery electric vehicle 10. The rotational speed sensor detects the rotational speed of the electric motor 44. The position sensor detects the position of the battery electric vehicle 10. Examples of the position sensor include a Global Navigation Satellite System (GNSS) sensor. The recognition sensor is a sensor that recognizes (detects) the situation around the battery electric vehicle 10. Examples of the recognition sensor include a camera, a LIDAR (Light Detection and Ranging), and a radar.

The battery electric vehicle 10 may be equipped with one or more speakers 70. The speaker 70 may be an in-vehicle speaker that outputs a sound to the vehicle cabin of the battery electric vehicle 10, for example. In another example, the speaker 70 may be an exterior speaker that outputs a sound to the outside of the battery electric vehicle 10. The battery electric vehicle 10 may include both an in-vehicle speaker and an exterior speaker.

The vehicle management system 100 is applied to such a battery electric vehicle 10, and manages the battery electric vehicle 10. The entire vehicle management system 100 may be mounted on the battery electric vehicle 10. In another example, at least a part of the vehicle management system 100 may be included in a management server that is external to the battery electric vehicle 10. In that case, the vehicle management system 100 may remotely manage the battery electric vehicle 10. In still another example, the vehicle management system 100 may be distributed to the battery electric vehicle 10 and the management server.

In general, the vehicle management system 100 include one or more processors 101 (hereinafter simply referred to as a "processor 101") and one or more storage devices 102 (hereinafter simply referred to as a "storage device 102"). The processor 101 executes various processes. Examples of the processor 101 include a general-purpose processor, a special-purpose processor, a central processing unit (CPU), a graphics processing unit (GPU), an application specific integrated circuit (ASIC), a field programmable gate array (FPGA), an integrated circuit, a conventional circuit, and/or a combination of these. The processor 101 may also be called "circuitry" or "processing circuitry". The circuitry is hardware programmed to implement a described function or hardware that executes a function. The storage device 102 stores various types of information. Examples of the storage device 102 include a volatile memory, a non-volatile memory, a hard disk drive (HDD), and a solid state drive (SSD). The function of the vehicle management system 100 is implemented through cooperation of the processor 101 and the storage device 102.

One or more vehicle management programs 105 (hereinafter simply referred to as a "vehicle management program 105") is a computer program executed by the processor 101. The function of the vehicle management system 100 may be implemented through cooperation of the processor 101 that executes the vehicle management program 105 and the storage device 102. The vehicle management program 105 is stored in the storage device 102. Alternatively, the vehicle management program 105 may be stored in a computer-readable storage medium.

For example, the vehicle management system 100 includes a function as a sound management system that manages a sound related to the battery electric vehicle 10. In this case, the vehicle management system 100 generates and manages a sound to be output from the speaker 70 mounted on the battery electric vehicle 10. Further, the vehicle management system 100 outputs the generated sound through the speaker 70 mounted on the battery electric vehicle 10. In another example, the vehicle management system 100 includes a function as a driving characteristic management system that manages driving characteristics related to the battery electric vehicle 10. The vehicle management system 100 may include both the functions of the sound management system and the driving characteristic management system.

### 2. Simulation Mode

The battery electric vehicle 10 according to the present embodiment includes a simulation mode in which a simulation target that includes at least either of a driving sound of a virtual mobile body and driving characteristics of a virtual vehicle is simulated. In contrast to the simulation mode, a normal driving state, that is, a state not in the simulation mode, is called a "normal mode". The normal mode and the simulation mode are switchable. Typically, a driver of the battery electric vehicle 10 switches the two modes using a switch, an audio input, etc. Respective cases where the simulation target is a driving sound of a virtual mobile body and driving characteristics of a virtual vehicle will be described below.

### 2-1. Simulation of Driving Sound of Virtual Mobile Body

The simulation target in the simulation mode includes a driving sound of a virtual mobile body that is not the battery electric vehicle 10. In the simulation mode, the vehicle management system 100 generates a pseudo driving sound that simulates the driving sound of the virtual mobile body, and outputs the pseudo driving sound through the speaker 70. The virtual mobile body may be an engine-driven automobile, for example. The engine-driven automobile is a vehicle on which an engine (internal combustion engine) is mounted and which uses the engine as a power unit for travel. In this case, the vehicle management system 100 generates a "pseudo engine sound" that simulates an engine sound of the engine-driven automobile as a pseudo driving sound. Then, the vehicle management system 100 outputs the pseudo engine sound through the speaker 70 mounted on the battery electric vehicle 10.

The virtual mobile body is not limited to an engine-driven automobile. The virtual mobile body may be other battery electric vehicles, or mobile bodies that are different from automobiles (such as trains, airplanes, and ships, for example). That is, the pseudo driving sound output from the speaker 70 is not limited to a pseudo engine sound. In addition, the virtual mobile body is not limited to an actual entity. For example, the simulation target may be a driving sound of a fictional mobile body that appears in a video work.

In the following description, a "pseudo engine sound" is considered as a sound output from the speaker 70, by way of example. However, the present disclosure is similarly applicable to other driving sounds. In general cases, the "pseudo engine sound" and the "engine sound" as used in the following description should be read as a "driving sound".

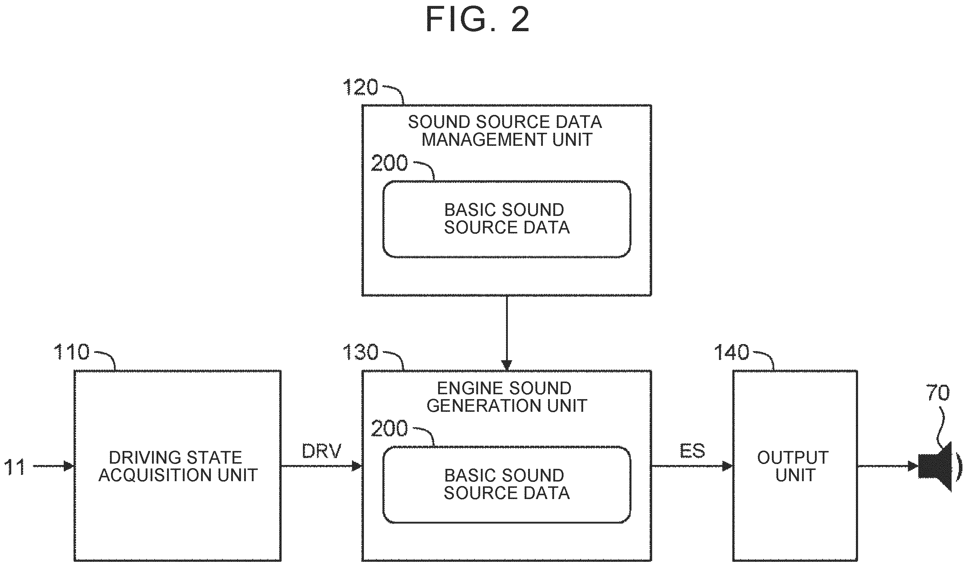

FIG. 2 is a block diagram illustrating an example of the basic functional configuration of the vehicle management system 100. The vehicle management system 100 includes, as functional blocks, a driving state acquisition unit 110, a sound source data management unit 120, an engine sound generation unit 130, and an output unit 140. These functional blocks may be implemented through cooperation of the processor 101 that executes the vehicle management program 105 and the storage device 102, for example.

The driving state acquisition unit 110 acquires driving state information DRV that indicates the driving state of the battery electric vehicle 10. The driving state information DRV includes information about a driving operation by a driver, information about the travel state of the battery electric vehicle 10, mode information on the battery electric vehicle 10 (whether in the normal mode or in the simulation mode), information about the situation around the battery electric vehicle 10, etc. Typically, the driving state information DRV includes information detected by the sensors 11 mounted on the battery electric vehicle 10. For example, the driving state information DRV may include the operation amount of an accelerator pedal (accelerator operation amount), the operation amount of a brake pedal (brake operation amount), a steering angle, a steering speed, steering torque, a wheel speed, a vehicle speed, a front-rear acceleration, a lateral acceleration, the rotational speed of the electric motor 44, etc.

The driving state information DRV also includes a virtual engine rotational speed Ne. Here, it is assumed that the battery electric vehicle 10 uses a virtual engine as a power unit for travel. The virtual engine rotational speed Ne is the rotational speed of the virtual engine at the time when it is assumed that the battery electric vehicle 10 is driven by the virtual engine. For example, the driving state acquisition unit 110 may calculate the virtual engine rotational speed Ne so as to increase as the wheel speed increases. When the battery electric vehicle 10 includes a manual mode (MT mode) to be discussed later, meanwhile, the driving state acquisition unit 110 may calculate the virtual engine rotational speed Ne in the manual mode based on the wheel speed, a total speed reduction ratio, and the slip rate of a virtual clutch. The method of calculating the virtual engine rotational speed Ne in the manual mode will be discussed in detail later.

The sound source data management unit 120 stores and manages basic sound source data 200 that are used to generate a pseudo engine sound. The sound source data management unit 120 is mainly implemented by the one or more storage devices 102. Typically, the basic sound source data 200 include a plurality of types of sound source data. Examples of the types of sound source data include sound source data (for low rotational speed, medium rotational speed, and high rotational speed) on sounds due to engine combustion, sound source data (for low rotational speed, medium rotational speed, and high rotational speed) on sounds due to the drive system such as gears, sound source data on noise sounds, and sound source data on event sounds (e.g. scraping sound and engine stall sound). The sound source data are generated in advance through simulations etc. based on an engine model and a vehicle model of an engine-driven automobile. The sound source data are flexibly adjustable. That is, at least one of the sound pressure and the frequency of sounds represented by the sound source data is flexibly adjustable.

The engine sound generation unit 130 (engine sound simulator) is a simulator that generates a pseudo engine sound. The engine sound generation unit 130 acquires at least a part of the driving state information DRV from the driving state acquisition unit 110. In particular, the engine sound generation unit 130 acquires information on the virtual engine rotational speed Ne and the vehicle speed from the driving state acquisition unit 110. The engine sound generation unit 130 also reads the basic sound source data 200 from the sound source data management unit 120. Then, the engine sound generation unit 130 generates a pseudo engine sound that matches the driving state (virtual engine rotational speed Ne and vehicle speed) of the battery electric vehicle 10 by combining one or more sound source data included in the basic sound source data 200. Engine sound data ES are data that represent the generated pseudo engine sound.

As discussed earlier, the driving state information DRV includes mode information on the battery electric vehicle 10. The engine sound generation unit 130 that has acquired the driving state information DRV generates a pseudo engine sound when the battery electric vehicle 10 is in the simulation mode. When the battery electric vehicle 10 is in the normal mode, on the other hand, a pseudo engine sound is not generated.

Generation of a pseudo engine sound is a well-known technique, and is not specifically limited in the present embodiment. For example, a pseudo engine sound may be generated by a well-known engine sound simulator adopted in games etc. A map of the virtual engine rotational speed Ne and the frequency and a map of virtual engine torque and the sound pressure may be prepared, and the frequency of the pseudo engine sound may be increased and decreased in proportion to the virtual engine rotational speed Ne and the sound pressure may be increased and decreased in proportion to the virtual engine torque.

The output unit 140 receives the engine sound data ES generated by the engine sound generation unit 130. Then, the output unit 140 outputs a pseudo engine sound through the speaker 70 based on the engine sound data ES.

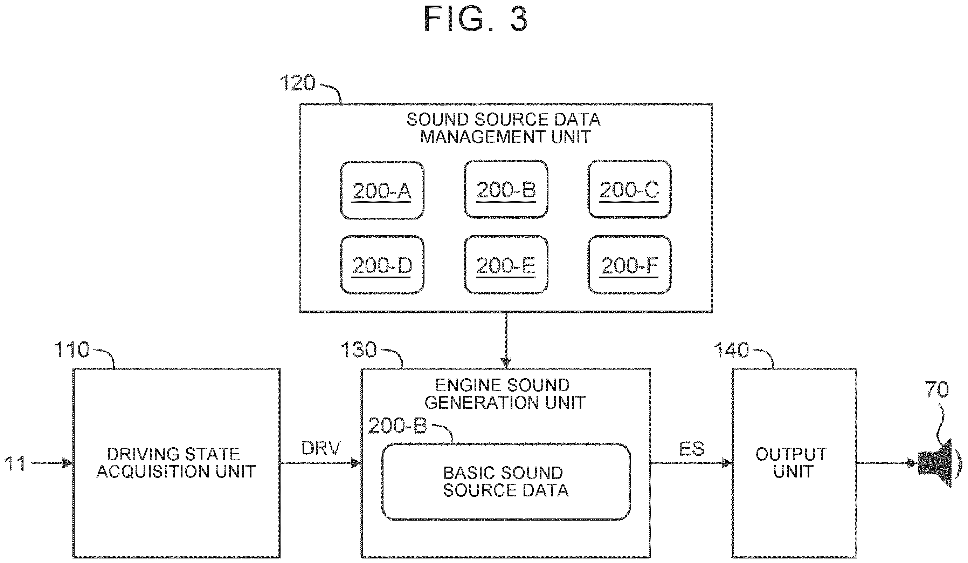

FIG. 3 is a block diagram illustrating another example of the basic functional configuration of the vehicle management system 100. In the example illustrated in FIG. 3, the sound source data management unit 120 stores and manages a plurality of types of basic sound source data 200 (200-A, 200-B, 200-C, ...) respectively corresponding to a plurality of vehicle types (A, B, C, ...). That is, the sound source data management unit 120 stores and manages basic sound source data 200 for each vehicle type. The basic sound source data 200 are generated in advance based on the engine model and the vehicle model for the corresponding vehicle type. The driver may specify his/her favorite vehicle type from among a plurality of vehicle types. In that case, the engine sound generation unit 130 acquires one corresponding to the vehicle type specified by the driver, from among the types of basic sound source data 200. Then, the engine sound generation unit 130 generates a pseudo engine sound using the acquired basic sound source data 200 (e.g. the basic sound source data 200-B corresponding to the vehicle type B). This allows the driver to feel as if he/she was driving a vehicle of his/her favorite type.

When the example illustrated in FIG. 3 is generalized, it can be said that there is a plurality of options for a sound as the simulation target. For example, the options include a pseudo engine sound for each of the vehicle types. In another example, the options may include a pseudo driving sound of each of a plurality of types of virtual mobile bodies (e.g. vehicles, trains, and airplanes). In any case, the driver can select his/her favorite sound from among the options.

### 2-2. Simulation of Driving Characteristics of Virtual Vehicle

The simulation target in the simulation mode includes driving characteristics of a virtual vehicle. For example, the battery electric vehicle 10 may include a manual mode (MT mode) in which driving characteristics of a manual transmission (MT) vehicle is simulated. Here, the MT vehicle refers to a conventional vehicle that includes a manual transmission (MT) in which the gear ratio is switched through a transmission and a manual operation by a driver. That is, the manual mode (MT mode) refers to a control mode for an electric motor for simulating torque characteristics and manual shifting operation of an MT vehicle. The configuration of the battery electric vehicle 10 that includes the manual mode (MT mode) will be discussed later.

In another example, the battery electric vehicle 10 may simulate driving characteristics of a battery electric vehicle of a different type from the battery electric vehicle 10. In this case, the virtual vehicle is a battery electric vehicle of a different type from the battery electric vehicle 10.

The driving sound of the virtual mobile body and the driving characteristics of the virtual vehicle may be simulated at the same time. For example, the manual mode (MT mode) in which torque characteristics of an MT vehicle are simulated and simulation of a pseudo engine sound of the relevant MT vehicle may be enabled at the same time. This allows the driver to feel the torque characteristics and the pseudo engine sound of the MT vehicle at the same time.

### 3. Vehicle Management Performed in Consideration of Driving Proficiency

In the present embodiment, the vehicle management system 100 changes options for the simulation target according to the degree of proficiency in driving of the driver in simulation mode driving (hereinafter referred to "driving proficiency"). The term "simulation mode driving" as used herein means driving of the battery electric vehicle 10 in the simulation mode. In the following, sound management and driving characteristic management based on the driving proficiency will be described, and thereafter the driving proficiency will be described using specific examples.

### 3-1. Sound Management Based on Driving Proficiency

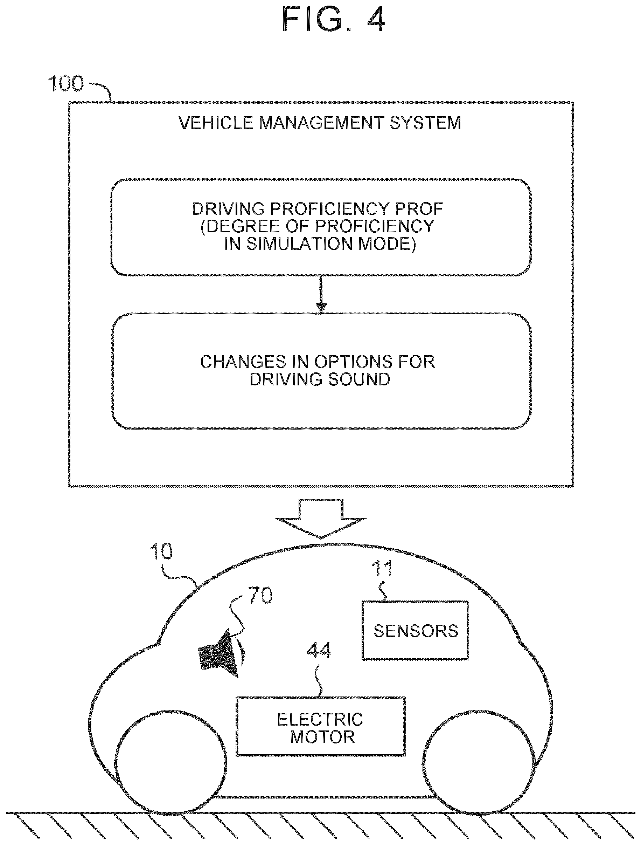

FIG. 4 is a conceptual diagram illustrating an overview of sound management based on the driving proficiency PROF. With the present embodiment, the vehicle management system 100 can acquire the driving proficiency PROF, and change options for a pseudo engine sound.

The vehicle management system 100 may change options for a pseudo engine sound according to the driving proficiency PROF. To "change options for a pseudo engine sound" includes the vehicle management system 100 increasing options for a pseudo engine sound as the driving proficiency PROF of the driver becomes higher. Conversely, to "change options for a pseudo engine sound" also includes the vehicle management system 100 decreasing options for a pseudo engine sound as the driving proficiency PROF of the driver becomes lower. When options for a pseudo engine sound are changed according to the driving proficiency PROF, options for a pseudo engine sound may be changed from options set in the initial state.

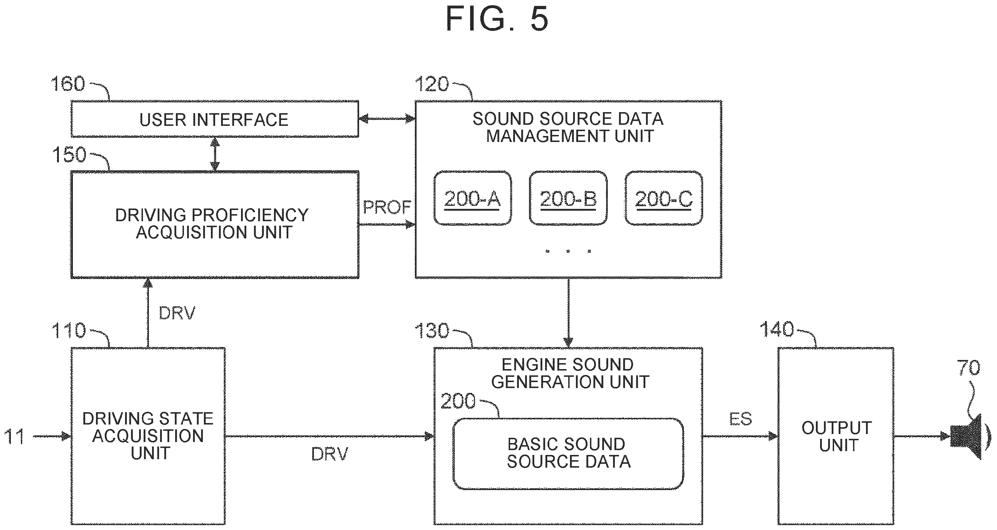

FIG. 5 is a block diagram illustrating an example of the functional configuration of the vehicle management system 100 according to the present embodiment. The vehicle management system 100 may further include a driving proficiency acquisition unit 150, in addition to the functional blocks illustrated in FIG. 2. These functional blocks may be implemented through cooperation of the processor 101 that executes the vehicle management program 105 and the storage device 102.

The driving state acquisition unit 110, the sound source data management unit 120, the engine sound generation unit 130, and the output unit 140 are the same as those according to the embodiment discussed above.

The vehicle management system 100 may include a user interface 160. The user interface 160 includes an input device and an output device. Examples of the input device include a touch panel, a button, a switch, a keyboard, and a microphone. Examples of the output device include a touch panel, a display, and a speaker. When the present driving state is simulation mode driving, the vehicle management system 100 may notify a user (driver) via the user interface 160 that simulation mode driving is being executed. For example, the vehicle management system 100 displays on a display device visual information indicating that simulation mode driving is being executed. In another example, the vehicle management system 100 may output from a speaker audio information indicating that simulation mode driving is being executed.

The driving proficiency acquisition unit 150 outputs the driving proficiency PROF to the sound source data management unit 120. The sound source data management unit 120 changes the type of the available basic sound source data 200 according to the driving proficiency PROF. The available basic sound source data 200 are provided from a management server, for example. The type of the available basic sound source data 200 being changed is equivalent to available options for a pseudo engine sound being changed.

For example, the sound source data management unit 120 increases the types of the available basic sound source data 200 as the driving proficiency PROF becomes higher. In other words, the sound source data management unit 120 increases options for a pseudo engine sound as the driving proficiency PROF becomes higher. When options for a pseudo engine sound are changed according to the driving proficiency PROF, options for a pseudo engine sound may be changed from options set in the initial state.

The user (driver) of the battery electric vehicle 10 can specify a desired one from among the types of the basic sound source data 200 via the user interface 160. The engine sound generation unit 130 generates a pseudo engine sound using the basic sound source data 200 specified by the user. That is, the user of the battery electric vehicle 10 can specify a desired one from among the options for a pseudo engine sound via the user interface 160.

As discussed above, the driving sound according to the present disclosure is not limited to a pseudo engine sound. The present disclosure is also applicable to other driving sounds that are different from a pseudo engine sound.

In this manner, the driver that performs simulation mode driving can enjoy the changes in options for a pseudo engine sound discussed above. It can be said that the changes in options for a pseudo engine sound are privileges or rewards given to the driver that performs simulation mode driving. The driver that performs simulation mode driving feels satisfied with the privileges or the rewards given to himself/herself. This simulation mode is attractive for drivers that have not chosen battery electric vehicles so far for the reason that the driving sound of battery electric vehicles is different from that of engine-driven automobiles. Further, the driver can have further fun when options for a pseudo engine sound are changed.

### 3-2. Driving Characteristic Management Based on Driving Proficiency

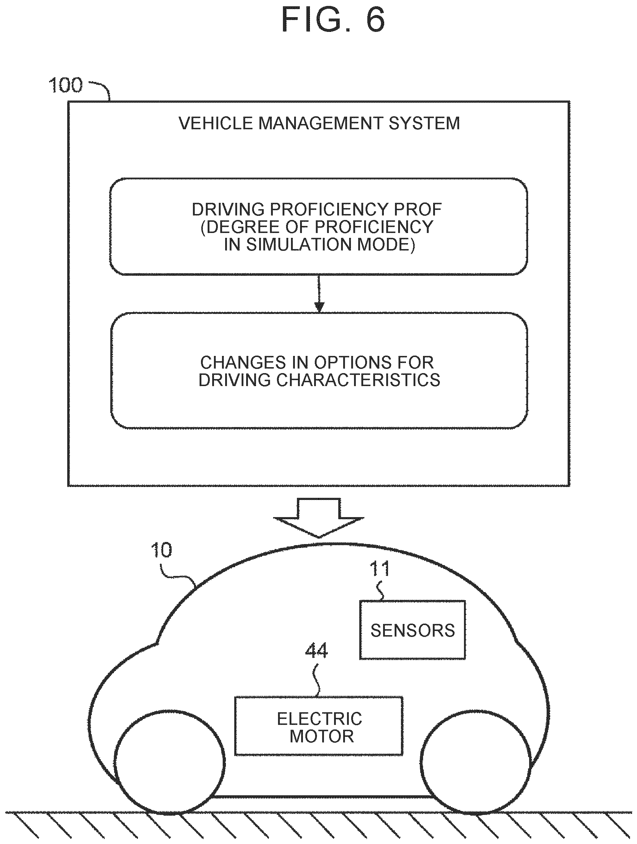

FIG. 6 is a conceptual diagram illustrating an overview of driving characteristic management based on the driving proficiency PROF. With the present embodiment, the vehicle management system 100 can acquire the driving proficiency PROF, and change options for driving characteristics of the battery electric vehicle 10.

The vehicle management system 100 may change options for driving characteristics according to the driving proficiency PROF. To "change options for driving characteristics" includes the vehicle management system 100 increasing options for driving characteristics as the driving proficiency PROF of the driver becomes higher. Conversely, to "change options for driving characteristics" also includes the vehicle management system 100 decreasing options for driving characteristics as the driving proficiency PROF of the driver becomes lower. When options for driving characteristics are changed according to the driving proficiency PROF, options for driving characteristics may be changed from options set in the initial state.

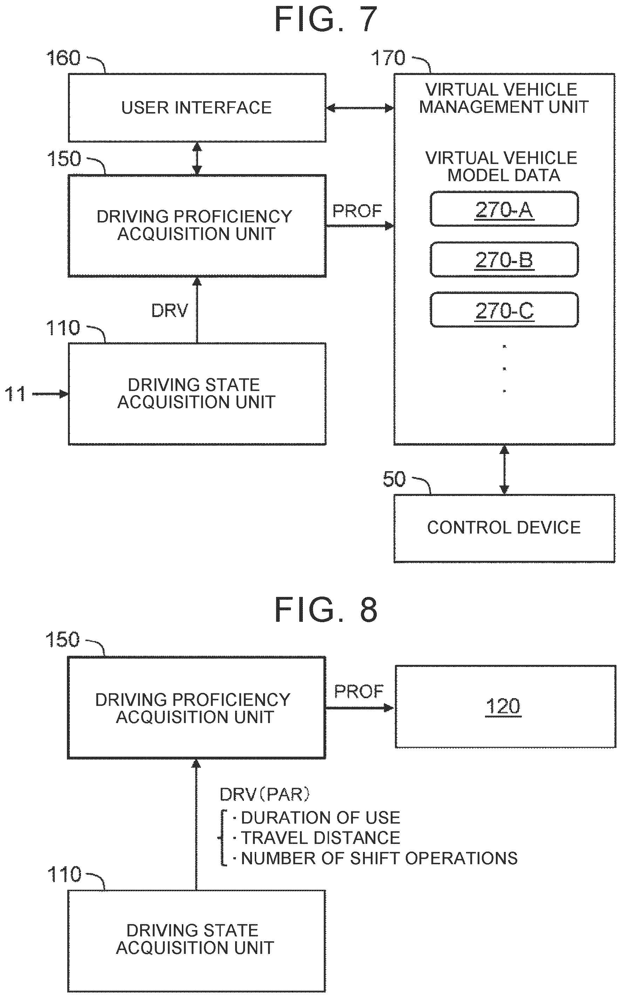

FIG. 7 is a block diagram illustrating an example of the functional configuration of the vehicle management system 100. The vehicle management system 100 includes, as functional blocks, a driving state acquisition unit 110, a driving proficiency acquisition unit 150, and a virtual vehicle management unit 170. These functional blocks may be implemented through cooperation of the processor 101 that executes the vehicle management program 105 and the storage device 102, for example. In addition, the vehicle management system 100 may include a user interface 160, as with the sound management discussed above.

The driving state acquisition unit 110, the driving proficiency acquisition unit 150, and the user interface 160 are the same as those according to the embodiment discussed above.

The virtual vehicle management unit 170 manages virtual vehicle model data 270 that indicate models of a virtual vehicle. In the case of the manual mode (MT mode) in which torque characteristics of an MT vehicle are simulated, the virtual vehicle model data 270 include an MT vehicle model to be discussed later. When the MT vehicle as the virtual vehicle is different, the MT vehicle model, that is, the virtual vehicle model data 270, is also different, and as a result, torque characteristics as the simulation target are also different.

The driving proficiency acquisition unit 150 outputs the driving proficiency PROF to the virtual vehicle management unit 170. The virtual vehicle management unit 170 changes the type of the available virtual vehicle model data 270 according to the driving proficiency PROF. The available virtual vehicle model data 270 are provided from a management server, for example. The type of the available virtual vehicle model data 270 being changed is equivalent to options for driving characteristics available in the simulation mode being changed.

For example, the virtual vehicle management unit 170 increases the types of the available virtual vehicle model data 270 as the driving proficiency PROF becomes higher. In other words, the virtual vehicle management unit 170 increases options for driving characteristics available in the simulation mode as the driving proficiency PROF becomes higher. When options for driving characteristics are changed according to the driving proficiency PROF, options for driving characteristics may be changed from options set in the initial state.

The user (driver) of the battery electric vehicle 10 can specify a desired one from among a plurality of types of virtual vehicle model data 270 via the user interface 160. A control device 50 simulates driving characteristics of a virtual vehicle using the virtual vehicle model data 270 specified by the user. That is, the user of the battery electric vehicle 10 can specify a desired one from among options for driving characteristics via the user interface 160.

The vehicle management system 100 includes the control device 50. The control device 50 is typically an electronic control unit (ECU) mounted on the battery electric vehicle 10. The control device 50 may be a combination of a plurality of ECUs. The control device 50 includes an interface, a memory, and a processor. An in-vehicle network is connected to the interface. The memory includes a random access memory (RAM) that temporarily stores data and a read only memory (ROM) that stores programs that are executable by the processor and a variety of data associated with the programs. The programs are composed of a plurality of instructions. The processor reads the programs and the data from the memory, executes the programs, and generates a control signal based on signals acquired from sensors.

The control device 50 includes an automatic mode (EV mode) and a manual mode (MT mode) as control modes. The automatic mode is a normal control mode for driving the battery electric vehicle 10 as a general battery electric vehicle. The automatic mode is programmed to continuously vary the output of the electric motor 44 according to an operation of the accelerator pedal. On the other hand, the manual mode is a control mode for driving the battery electric vehicle 10 as an MT vehicle. The automatic mode (EV mode) and the manual mode (MT mode) are switchable. The power control system via the control device 50 will be discussed in detail later.

In this manner, the driver that performs simulation mode driving can enjoy the changes in options for driving characteristics of a virtual vehicle discussed above. It can be said that the changes in options for driving characteristics are privileges or rewards given to the driver that performs simulation mode driving. The driver that performs simulation mode driving feels satisfied with the privileges or the rewards given to himself/herself. This simulation mode is attractive for drivers that have not chosen battery electric vehicles so far for the reason that the driving characteristics of battery electric vehicles are different from those of conventional vehicles. Further, the driver can have further fun when options for driving characteristics are changed.

### 3-3. Specific Examples of Driving Proficiency

FIG. 8 is a conceptual diagram illustrating an overview of vehicle management based on the driving proficiency PROF. As discussed earlier, the vehicle management system 100 according to the present embodiment changes options for the simulation target in the simulation mode according to the driving proficiency PROF. The driving proficiency PROF is calculated based on the following basic parameter PAR.

Examples of the basic parameter PAR include the duration of use of the simulation mode and the distance of travel in the simulation mode. In this case, the driving proficiency PROF may be a cumulative value of the duration of use or the travel distance, or may be the total of the duration of use or the travel distance in a certain period (e.g. one month or one year). Other examples of the basic parameter PAR include the number of times of use of the simulation mode in a certain period, that is, the frequency of use of the simulation mode.

In the case of the manual mode in which torque characteristics of an MT vehicle are simulated, examples of the basic parameter PAR include the number of shift operations. As in the example discussed above, a cumulative value of the number of shift operations or the number of shift operations in a certain period is calculated as the driving proficiency PROF.

More than one type of basic parameter PAR may be referenced to calculate the driving proficiency PROF. For example, the driving proficiency PROF may be calculated with respect to both the number of shift operations and the duration of use of the simulation mode.

The basic parameter PAR is included in the driving state information DRV discussed earlier. Based on the conceptual diagram for the sound management illustrated in FIG. 5, the driving state information DRV is acquired by the driving state acquisition unit 110, and sent to the driving proficiency acquisition unit 150. The driving proficiency acquisition unit 150 acquires driving proficiency PROF based on the basic parameter PAR (included in the driving state information DRV). The driving proficiency PROF is provided to the sound source data management unit 120.

The sound source data management unit 120 determines the basic sound source data 200 that can be used according to the driving proficiency PROF. The sound source data management unit 120 has a plurality of predetermined values set in advance, and manages the basic sound source data 200 that can be used based on the magnitude relationship between the driving proficiency PROF and the predetermined values. For example, the sound source data management unit 120 acquires new basic sound source data 200 each time the driving proficiency PROF exceeds each of the predetermined values. The new basic sound source data 200 may be provided from a management server.

The mode in the case of the driving characteristic management can be described by replacing the sound source data management unit 120 in the case of the sound management discussed above with the virtual vehicle management unit 170.

### 3-4. Effects

In the vehicle management system 100, as has been discussed so far, the battery electric vehicle 10 includes a simulation mode in which a driving sound of a virtual mobile body or driving characteristics of a virtual vehicle as the simulation target are simulated. Then, options for the simulation target are changed according to the driving proficiency PROF of the driver. The driver can enjoy such changes in options for the simulation target. It can be said that the changes in options for the simulation target are privileges or rewards given to the driver that performs simulation mode driving. The driver that performs simulation mode driving feels satisfied with the privileges or the rewards given to himself/herself. Battery electric vehicles with the simulation mode are attractive for drivers that have not chosen battery electric vehicles so far for the reason that the driving sound or the driving characteristics of the battery electric vehicles are different from those of other mobile bodies (such as engine-driven automobiles).

The feature of the present disclosure is that options for the simulation target in the simulation mode are changed. When options for the simulation target are changed, the driver can have fun that he/she has never experienced so far. This is expected to encourage more drivers to choose battery electric vehicles, proliferating the battery electric vehicles in society. The battery electric vehicles do not emit greenhouse gases such as carbon dioxide during travel, and therefore the proliferation of the battery electric vehicles may contribute to the realization of a low-carbon society. In other words, the vehicle management system 100 that changes options for the simulation target in the simulation mode may contribute to the proliferation of battery electric vehicles, and hence to the realization of a low-carbon society.

### 4. Various Operation Modes

Various operation modes of the vehicle management system 100 according to the present embodiment will be described below.

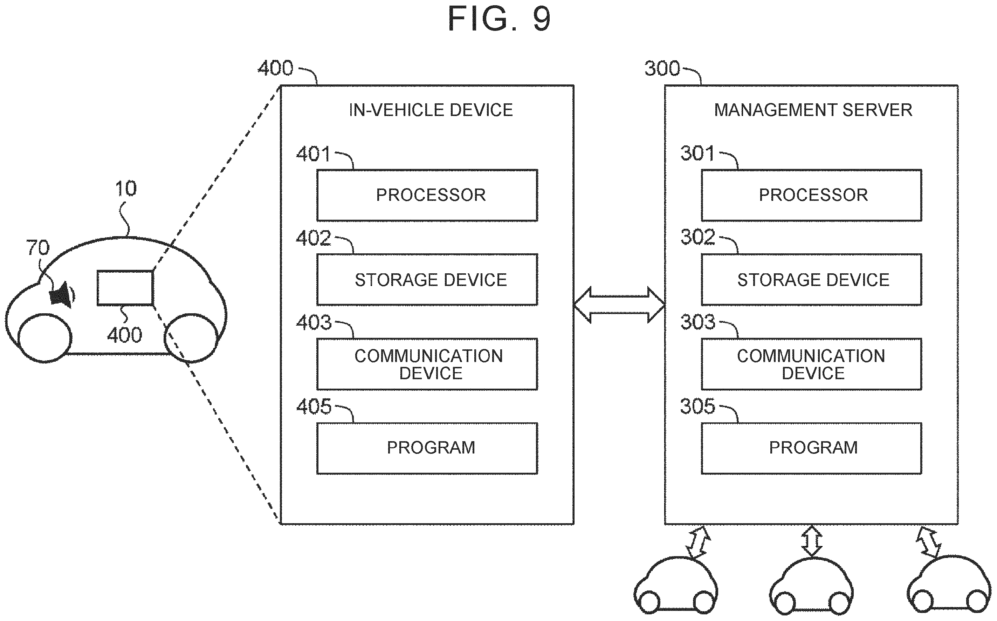

FIG. 9 is a block diagram illustrating an in-vehicle device 400 and a management server 300 that constitute the vehicle management system 100. The in-vehicle device 400 and the management server 300 can communicate with each other via a communication network.

The in-vehicle device 400 is mounted on the battery electric vehicle 10. The in-vehicle device 400 includes one or more processors 401 (hereinafter simply referred to as a "processor 401"), one or more storage devices 402 (hereinafter simply referred to as a "storage device 402"), and a communication device 403. The processor 401 executes various processes. Examples of the processor 401 include a general-purpose processor, a special-purpose processor, a CPU, a GPU, an ASIC, an FPGA, an integrated circuit, a conventional circuit, and/or a combination of these. The processor 401 may also be called "circuitry" or "processing circuitry". The storage device 402 stores various types of information. Examples of the storage device 402 include a volatile memory, a non-volatile memory, an HDD, and an SSD. The communication device 403 communicates with the management server 300. The function of the in-vehicle device 400 is implemented through cooperation of the processor 401 and the storage device 402. The program 405 is a computer program executed by the processor 401. The function of the in-vehicle device 400 may be implemented through cooperation of the processor 401 that executes the program 405 and the storage device 402. The program 405 is stored in the storage device 402. Alternatively, the program 405 may be stored in a computer-readable storage medium.

The management server 300 includes one or more processors 301 (hereinafter simply referred to as a "processor 301"), one or more storage devices 302 (hereinafter simply referred to as a "storage device 302"), and a communication device 303. The processor 301 executes various processes. Examples of the processor 301 include a general-purpose processor, a special-purpose processor, a CPU, a GPU, an ASIC, an FPGA, an integrated circuit, a conventional circuit, and/or a combination of these. The processor 301 may also be called "circuitry" or "processing circuitry". The storage device 302 stores various types of information. Examples of the storage device 302 include a volatile memory, a non-volatile memory, an HDD, and an SSD. The communication device 303 communicates with in-vehicle devices 400 of a large number of battery electric vehicles 10. The function of the management server 300 is implemented through cooperation of the processor 301 and the storage device 302. The program 305 is a computer program executed by the processor 301. The function of the in-vehicle device 400 may be implemented through cooperation of the processor 301 that executes the program 305 and the storage device 302. The program 305 is stored in the storage device 302. Alternatively, the program 305 may be stored in a computer-readable storage medium.

One of the processor 401 of the in-vehicle device 400 and the processor 301 of the management server 300, or a combination of such processors, corresponds to the one or more processors 101 illustrated in FIG. 1. One of the storage device 402 of the in-vehicle device 400 and the storage device 302 of the management server 300, or a combination of such storage devices, corresponds to the one or more storage devices 102 illustrated in FIG. 1. One of the program 405 of the in-vehicle device 400 and the program 305 of the management server 300, or a combination of such programs, corresponds to the vehicle management program 105 illustrated in FIG. 1.

### 4-1. First Example

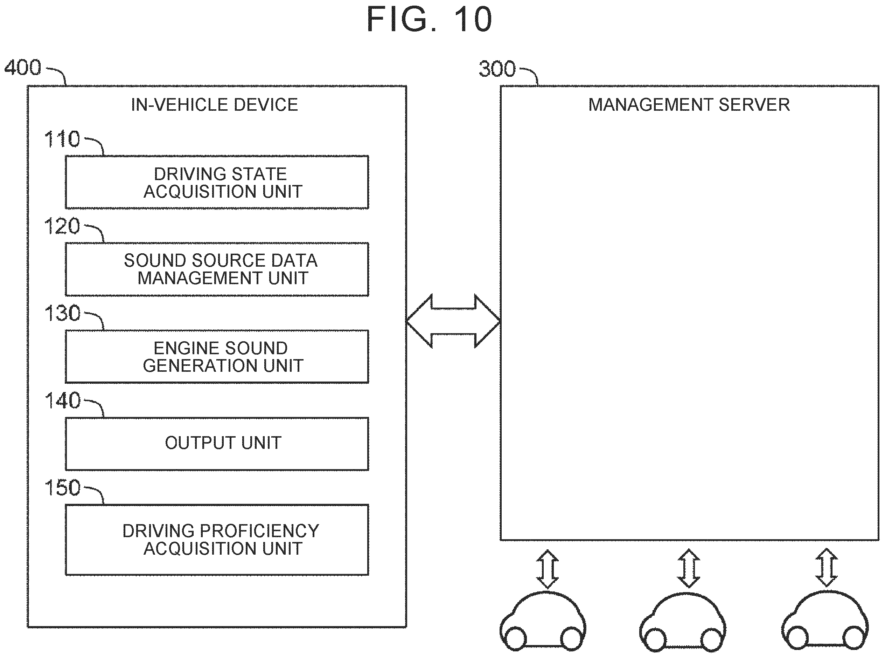

FIG. 10 is a block diagram illustrating a first example of the operation mode of the vehicle management system 100. In the first example, the driving state acquisition unit 110, the sound source data management unit 120, the engine sound generation unit 130, the output unit 140, and the driving proficiency acquisition unit 150 are all included in the in-vehicle device 400. Management of a pseudo engine sound is executed in the battery electric vehicle 10.

### 4-2. Second Example

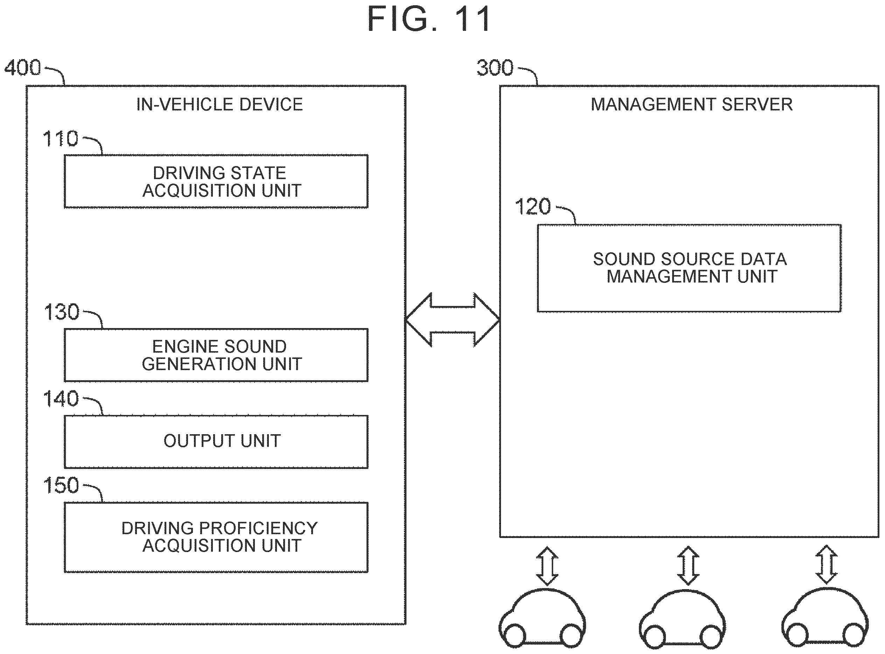

FIG. 11 is a block diagram illustrating a second example of the operation mode of the vehicle management system 100. In the second example, the sound source data management unit 120 is included in the management server 300, as compared with the above first example. The sound source data management unit 120 collectively manages the basic sound source data 200 that are used by a plurality of battery electric vehicles 10. To that end, the basic sound source data 200 are associated with a vehicle identifier (ID). The sound source data management unit 120 manages the available basic sound source data 200 for each vehicle ID.

The engine sound generation unit 130 of the in-vehicle device 400 downloads the available basic sound source data 200 associated with the vehicle ID from the sound source data management unit 120 of the management server 300.

The driving proficiency acquisition unit 150 of the in-vehicle device 400 may upload a set of the vehicle ID and the driving proficiency PROF to the management server 300. The frequency of uploading may be determined as desired. The sound source data management unit 120 of the management server 300 changes the type of the available basic sound source data 200 associated with the relevant vehicle ID based on the received driving proficiency PROF. For example, the sound source data management unit 120 increases the types of the available basic sound source data 200 as the driving proficiency PROF become s higher. The engine sound generation unit 130 of the in-vehicle device 400 downloads the available basic sound source data 200 associated with the vehicle ID from the sound source data management unit 120 of the management server 300.

In the second example, in this manner, the basic sound source data 200 that are used by the battery electric vehicles 10 are collectively managed by the management server 300. This is suitable from the viewpoint of managing the basic sound source data 200.

### 4-3. Third Example

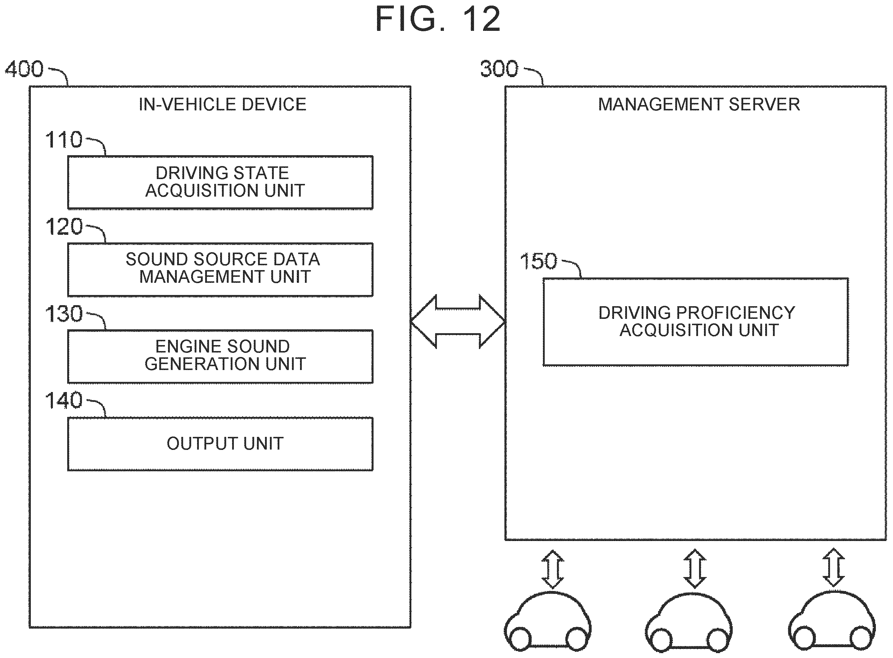

FIG. 12 is a block diagram illustrating a third example of the operation mode of the vehicle management system 100. In the third example, the driving proficiency acquisition unit 150 is included in the management server 300, as compared with the above first example. The driving proficiency acquisition unit 150 collectively manages the driving proficiency PROF for a plurality of battery electric vehicles 10. To that end, the driving proficiency PROF is associated with a vehicle ID. The driving proficiency acquisition unit 150 manages the driving proficiency PROF for each vehicle ID.

The in-vehicle device 400 uploads a set of the vehicle ID and the driving state information DRV to the management server 300. The frequency of uploading may be determined as desired. The driving proficiency acquisition unit 150 of the management server 300 acquires the driving proficiency PROF associated with the relevant vehicle ID based on the received driving state information DRV. Then, the driving proficiency acquisition unit 150 transmits the driving proficiency PROF to the battery electric vehicle 10 with the relevant vehicle ID. The in-vehicle device 400 of the battery electric vehicle 10 with the relevant vehicle ID performs sound management based on the received driving proficiency PROF.

According to the third example, it is not necessary that the in-vehicle device 400 should include the driving proficiency acquisition unit 150. Hence, it is possible to save the storage capacity of the in-vehicle device 400. In addition, it is possible to reduce a processing load on the in-vehicle device 400. Further, it is not necessary that the algorithm of the driving proficiency acquisition unit 150 should be updated in each of the large number of battery electric vehicles 10, but the algorithm of the driving proficiency acquisition unit 150 can be collectively updated easily.

### 4-4. Fourth Example

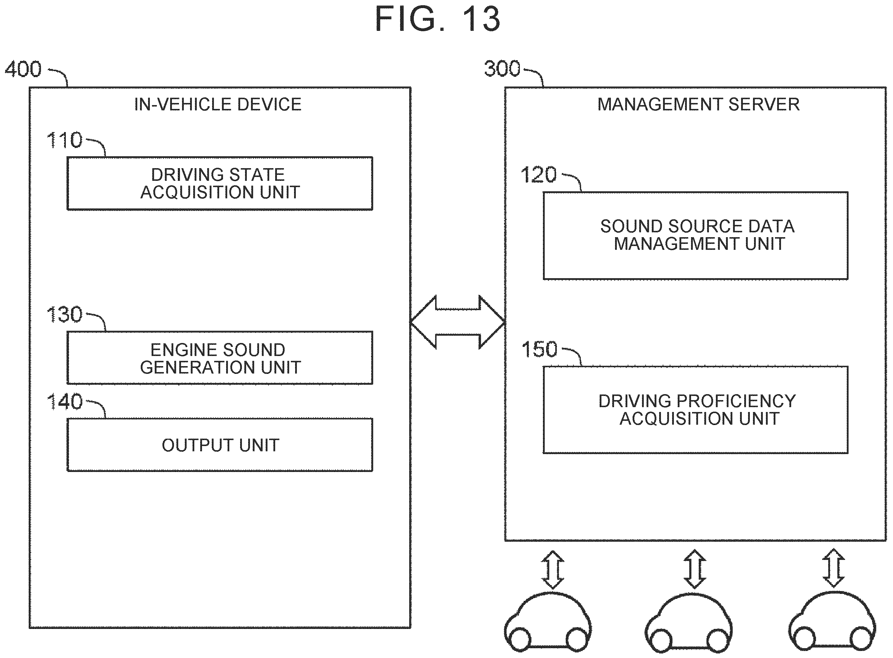

FIG. 13 is a block diagram illustrating a fourth example of the operation mode of the vehicle management system 100. In the fourth example, the sound source data management unit 120 and the driving proficiency acquisition unit 150 are included in the management server 300, as compared with the above first example. That is, the fourth example is a combination of the second example and the third example described above.

When the vehicle management system 100 manages driving characteristics, the sound source data management unit 120 in FIGS. 11 to 14 is replaced with the virtual vehicle management unit 170.

### 5. Application to Battery Electric Vehicle with Manual Mode (MT Mode)

Electric motors that are used as power units for travel in general battery electric vehicles are significantly different in torque characteristics from internal combustion engines that are used as power units for travel in conventional vehicles (CVs). Due to the difference in the torque characteristics of the power units, the battery electric vehicles generally do not include a transmission, while the CVs inevitably include a transmission. As a matter of course, general battery electric vehicles do not include a manual transmission (MT) in which the gear ratio is switched by a manual operation by a driver. Therefore, there is a significant difference in driving feel between driving of the conventional vehicles with an MT (MT vehicles) and driving of the battery electric vehicles.

On the other hand, torque of electric motors can be controlled relatively easily by controlling an applied voltage or a magnetic field. Thus, it is possible to obtain desired torque characteristics within the operating range of the electric motors by appropriately controlling the electric motors. By making use of this feature, torque characteristics peculiar to the MT vehicles can be simulated by controlling torque of the battery electric vehicles. In addition, the battery electric vehicles can be provided with a pseudo shifter so that the driver can obtain a driving feel that is similar to that of the MT vehicles. These enable the battery electric vehicles to simulate the MT vehicles.

That is, in the battery electric vehicles, an output of the electric motor is controlled so as to simulate driving characteristics (torque characteristics) peculiar to the MT vehicles. The driver performs a pseudo manual shifting operation by operating the pseudo shifter. In response to the pseudo manual shifting operation by the driver, the battery electric vehicle changes driving characteristics (torque characteristics) by simulating an MT vehicle. This allows the driver of the battery electric vehicle to feel as if he/she was driving an MT vehicle. The manual mode (MT mode) refers to a control mode for an electric motor for simulating driving characteristics and manual shifting operation of an MT vehicle. The battery electric vehicle 10 according to the present disclosure may include such a manual mode (MT mode).

Examples of the configuration of the battery electric vehicle 10 with the manual mode (MT mode) will be described below.

### 5-1. First Configuration Example (Sequential Shifter)

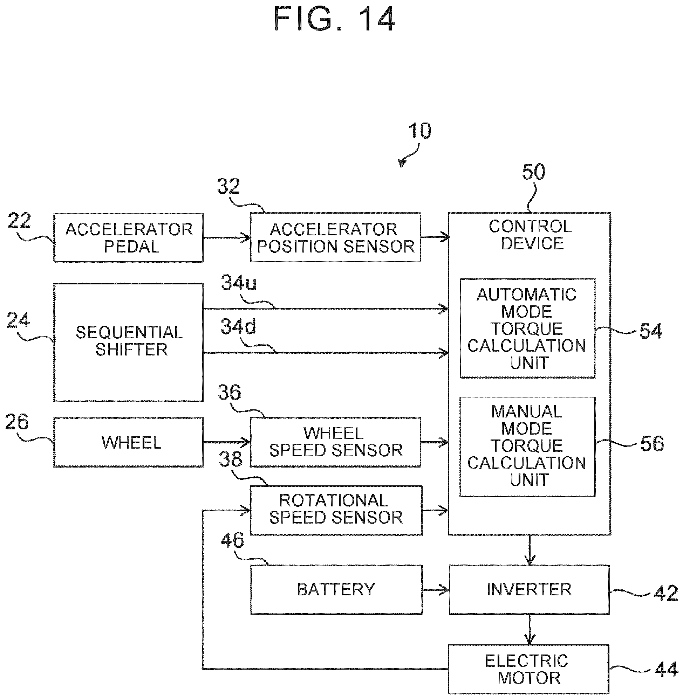

FIG. 14 is a block diagram illustrating a first example of the configuration of a power control system of the battery electric vehicle 10 according to the present embodiment. The battery electric vehicle 10 includes an electric motor 44, a battery 46, and an inverter 42. The electric motor 44 is a power unit for travel. The battery 46 stores electrical energy to drive the electric motor 44. That is, the battery electric vehicle 10 is a battery electric vehicle (BEV) that travels on the electrical energy stored in the battery 46. During acceleration, the inverter 42 converts DC power input from the battery 46 into drive power for the electric motor 44. During deceleration, meanwhile, the inverter 42 converts regenerative power input from the electric motor 44 into DC power to be charged in the battery 46.

The battery electric vehicle 10 includes an accelerator pedal 22 that is used by the driver to input an acceleration request to the battery electric vehicle 10. The accelerator pedal 22 is provided with an accelerator position sensor 32 that detects an accelerator operation amount.

The battery electric vehicle 10 includes a sequential shifter 24. The sequential shifter 24 may be a paddle-type shifter, or may be a lever-type pseudo shifter.

The paddle-type shifter is a dummy that is different from a real paddle-type shifter. The paddle-type shifter is structured to resemble paddle-type shifters provided in MT vehicles with no clutch pedal. The paddle-type shifter is attached to the steering wheel. The paddle-type shifter includes an upshift switch and a downshift switch that are used to determine an operation position. An upshift signal 34u is generated when the upshift switch is pulled forward, and a downshift signal 34d is generated when the downshift switch is pulled forward.

Meanwhile, the lever-type pseudo shifter is a dummy that is different from a real shifter, as with the paddle-type shifter. The lever-type pseudo shifter is structured to resemble lever-type shifters provided in MT vehicles with no clutch pedal. The lever-type pseudo shifter is configured to output an upshift signal 34u when a shift lever is tilted forward, and to output a downshift signal 34d when the shift lever is tilted rearward.

A wheel 26 of the battery electric vehicle 10 is provided with a wheel speed sensor 36. The wheel speed sensor 36 is used as a vehicle speed sensor that detects the vehicle speed of the battery electric vehicle 10. In addition, the electric motor 44 is provided with a rotational speed sensor 38 that detects the rotational speed of the electric motor 44.

The battery electric vehicle 10 includes a control device 50. The control device 50 is typically an electronic control unit (ECU) mounted on the battery electric vehicle 10. The control device 50 may be a combination of a plurality of ECUs. The control device 50 includes an interface, a memory, and a processor. An in-vehicle network is connected to the interface. The memory includes a random access memory (RAM) that temporarily stores data and a read only memory (ROM) that stores programs that are executable by the processor and a variety of data associated with the programs. The programs are composed of a plurality of instructions. The processor reads the programs and the data from the memory, executes the programs, and generates a control signal based on signals acquired from sensors.

For example, the control device 50 controls the electric motor 44 through pulse width modulation (PWM) control of the inverter 42. Signals from the accelerator position sensor 32, the sequential shifter 24 (an upshift switch and a downshift switch when the sequential shifter 24 is a paddle-type shifter), the wheel speed sensor 36, and the rotational speed sensor 38 are input to the control device 50. The control device 50 processes these signals, and calculates a motor torque instruction value to be used for PWM control of the inverter 42.

The control device 50 includes an automatic mode (EV mode) and a manual mode (MT mode) as control modes. The automatic mode is a normal control mode for driving the battery electric vehicle 10 as a general battery electric vehicle. The automatic mode is programmed to continuously vary an output of the electric motor 44 according to an operation of the accelerator pedal 22. On the other hand, the manual mode is a control mode for driving the battery electric vehicle 10 as an MT vehicle. The manual mode is programmed to vary the output characteristics of the electric motor 44 for an operation of the accelerator pedal 22 according to an upshift operation and a downshift operation of the sequential shifter 24. That is, the manual mode is a control mode in which the output of the electric motor 44 can be varied in response to a driving operation of a vehicle constituent element other than the accelerator pedal 22 or the brake pedal. The automatic mode (EV mode) and the manual mode (MT mode) are switchable.

The control device 50 includes an automatic mode torque calculation unit 54 and a manual mode torque calculation unit 56. Each of the units 54, 56 may be an independent ECU, or may be a function of an ECU obtained by a processor executing a program stored in a memory.

The automatic mode torque calculation unit 54 includes a function to calculate motor torque at the time when the electric motor 44 is controlled in the automatic mode. The automatic mode torque calculation unit 54 stores a motor torque instruction map. The motor torque instruction map is a map that is used to determine motor torque from the accelerator operation amount and the rotational speed of the electric motor 44. A signal from the accelerator position sensor 32 and a signal from the rotational speed sensor 38 are input as parameters for the motor torque instruction map. The motor torque instruction map outputs motor torque corresponding to these signals. For this reason, even if the driver operates the sequential shifter 24 in the automatic mode, such an operation is not reflected in the motor torque.

The manual mode torque calculation unit 56 includes an MT vehicle model. The MT vehicle model is a model for calculating drive wheel torque that should be obtained through operations of the accelerator pedal 22 and the sequential shifter 24 on the assumption that the battery electric vehicle 10 is an MT vehicle.

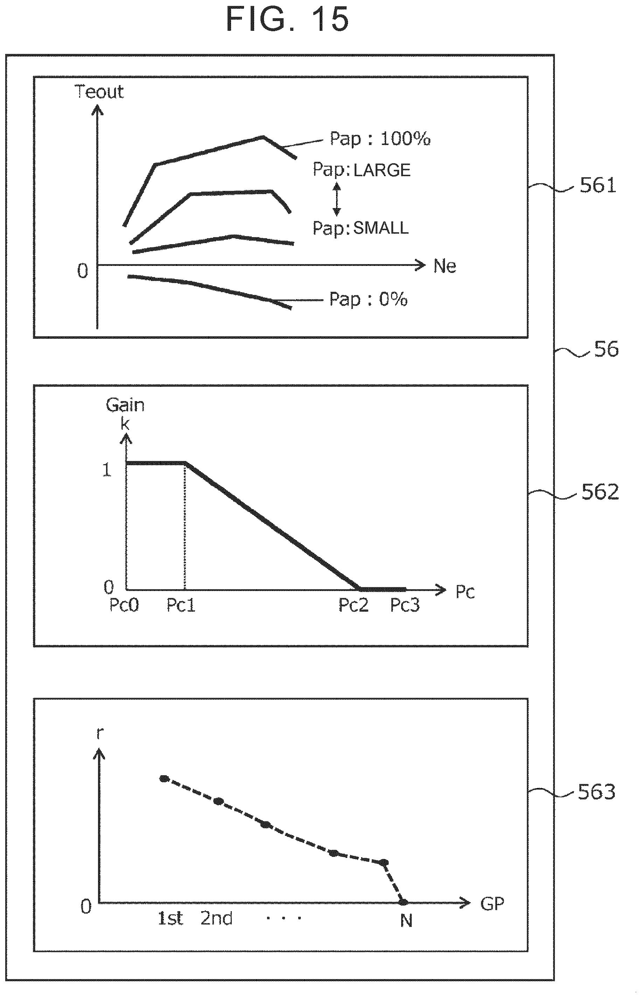

The MT vehicle model of the manual mode torque calculation unit 56 will be described with reference to FIG. 15. As illustrated in FIG. 15, the MT vehicle model includes an engine model 561, a clutch model 562, and a transmission model 563. An engine, a clutch, and a transmission virtually implemented by the MT vehicle model will be referred to as a "virtual engine", a "virtual clutch", and a "virtual transmission", respectively. The engine model 561 models the virtual engine. The clutch model 562 models the virtual clutch. The transmission model 563 models the virtual transmission.

The engine model 561 is used to calculate a virtual engine rotational speed Ne and virtual engine output torque Teout. The virtual engine rotational speed Ne is calculated based on a rotational speed Nw of the wheel, a total speed reduction ratio R, and a slip rate Rslip of the virtual clutch. For example, the virtual engine rotational speed Ne is represented by the following equation (1).
Equation (1): Ne = Nw × R/(1- Rslip)

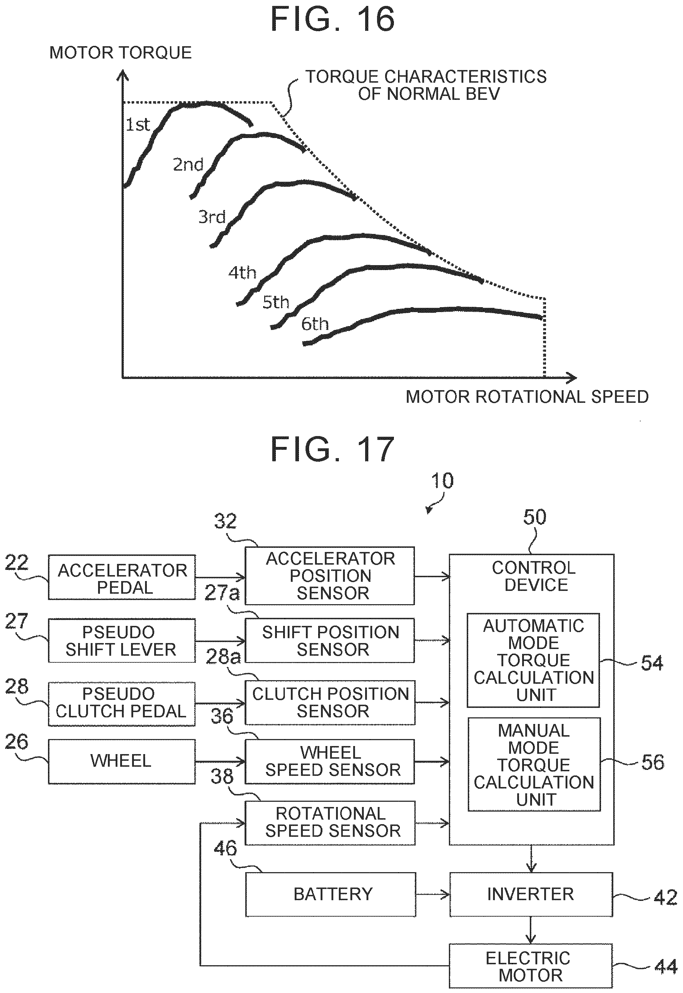

The virtual engine output torque Teout is calculated from the virtual engine rotational speed Ne and an accelerator operation amount Pap. The virtual engine output torque Teout is calculated using a map that prescribes the relationship among the accelerator operation amount Pap, the virtual engine rotational speed Ne, and the virtual engine output torque Teout as indicated in FIG. 15. In this map, the virtual engine output torque Teout is given with respect to the virtual engine rotational speed Ne for each accelerator operation amount Pap. The torque characteristics indicated in FIG. 16 may be set to characteristics assumed for a gasoline engine, or may be set to characteristics assumed for a diesel engine. In addition, the torque characteristics may be set to characteristics assumed for a naturally aspirated engine, or may be set to characteristics assumed for a supercharged engine.

The clutch model 562 is used to calculate a torque transfer gain k. The torque transfer gain k is a gain for calculating the degree of transfer of torque of the virtual clutch according to a virtual clutch operation amount Pc. The virtual clutch operation amount Pc is normally 0%, and is temporarily increased to 100% in conjunction with switching of the virtual gear position of the virtual transmission. The clutch model 562 has a map as indicated in FIG. 15. In this map, the torque transfer gain k is given with respect to the virtual clutch operation amount Pc. In FIG. 15, Pc0 corresponds to a position at which the virtual clutch operation amount Pc is 0%, and Pc3 corresponds to a position at which the virtual clutch operation amount Pc is 100%. A range from Pc0 to Pc1 and a range from Pc2 to Pc3 are dead bands in which the torque transfer gain k is not varied according to the virtual clutch operation amount Pc. The clutch model 562 is used to calculate clutch output torque Teout using the torque transfer gain k. The clutch output torque Teout is torque output from the virtual clutch. For example, the clutch output torque Teout is given as the product of the virtual engine output torque Teout and the torque transfer gain k (Teout = Teout × k).

The clutch model 562 is also used to calculate the slip rate Rslip. The slip rate Rslip is used by the engine model 561 to calculate the virtual engine rotational speed Ne. The slip rate Rslip can be calculated using a map in which the slip rate Rslip is given with respect to the virtual clutch operation amount Pc, as with the torque transfer gain k.

The transmission model 563 is used to calculate a gear ratio r. The gear ratio r is a gear ratio determined by a virtual gear position GP in the virtual transmission. The virtual gear position GP is upshifted by one position when an upshift operation of the sequential shifter 24 is received. On the other hand, the virtual gear position GP is downshifted by one position when a downshift operation of the sequential shifter 24 is received. The transmission model 563 has a map as indicated in FIG. 15. In this map, the gear ratio r is given with respect to the virtual gear position GP such that the gear ratio r becomes lower as the virtual gear position GP becomes higher. The transmission model 563 is used to calculate transmission output torque Tgout using the gear ratio r obtained from the map and the clutch output torque Tcout. For example, the transmission output torque Tgout is given as the product of the clutch output torque Tcout and the gear ratio r (Tgout = Tcout × r). The transmission output torque Tgout is non-continuously varied according to switching of the gear ratio r. These non-continuous variations in the transmission output torque Tgout cause shift shocks, allowing the vehicle to act like a vehicle with a stepped transmission.

The MT vehicle model is used to calculate drive wheel torque Tw using a predetermined speed reduction ratio rr. The speed reduction ratio rr is a fixed value determined by the mechanical structure from the virtual transmission to drive wheels. A value obtained by multiplying the speed reduction ratio rr by the gear ratio r is the total speed reduction ratio R discussed earlier. The MT vehicle model is used to calculate the drive wheel torque Tw from the transmission output torque Tgout and the speed reduction ratio rr. For example, the drive wheel torque Tw is given as the product of the transmission output torque Tgout and the speed reduction ratio rr (Tw = Tgout × rr).

The control device 50 converts the drive wheel torque Tw calculated using the MT vehicle model into required motor torque Tm. The required motor torque Tm is motor torque required to achieve the drive wheel torque Tw calculated using the MT vehicle model. The drive wheel torque Tw is converted into the required motor torque Tm using the speed reduction ratio from an output shaft of the electric motor 44 to the drive wheels. Then, the control device 50 controls the electric motor 44 by controlling the inverter 42 according to the required motor torque Tm.

FIG. 16 illustrates the torque characteristics of the electric motor 44 achieved through motor control performed using the MT vehicle model, in comparison to the torque characteristics of the electric motor 44 achieved through normal motor control for a battery electric vehicle (BEV). With the motor control performed using the MT vehicle model, as indicated in FIG. 16, it is possible to achieve torque characteristics (solid lines in the drawing) that simulate the torque characteristics of an MT vehicle according to virtual gear positions set by the sequential shifter 24. In FIG. 16, the number of gear positions is six.

### 5-2. Second Configuration Example

FIG. 17 is a block diagram illustrating a second example of the configuration of the power control system of the battery electric vehicle 10 according to the present embodiment. Here, only components that are different from those according to the first configuration example discussed above will be described. Specifically, in the second configuration example, the battery electric vehicle 10 includes a pseudo shift lever (pseudo shift device) 27 and a pseudo clutch pedal 28, in place of the sequential shifter 24 provided in the first configuration example. The pseudo shift lever 27 and the pseudo clutch pedal 28 are dummies that are different from a real shift lever and clutch pedal.

The pseudo shift lever 27 is structured to simulate a shift lever provided in an MT vehicle. The arrangement and the operating feel of the pseudo shift lever 27 are equivalent to those in an actual MT vehicle. The pseudo shift lever 27 is provided with positions corresponding to gear positions of first speed, second speed, third speed, fourth speed, fifth speed, sixth speed, reverse, and neutral, for example. The pseudo shift lever 27 is provided with a shift position sensor 27a that detects a gear position by determining which position the pseudo shift lever 27 is in.

The pseudo clutch pedal 28 is structured to simulate a clutch pedal provided in an MT vehicle. The arrangement and the operating feel of the pseudo clutch pedal 28 are equivalent to those in an actual MT vehicle. The pseudo clutch pedal 28 is operated when operating the pseudo shift lever 27. That is, the driver depresses the pseudo clutch pedal 28 when it is desired to change the setting of the gear position using the pseudo shift lever 27, and stops depressing the pseudo clutch pedal 28 and returns the pseudo clutch pedal 28 to the original position when the change in the setting of the gear position is finished. The pseudo clutch pedal 28 is provided with a clutch position sensor 28a that detects the amount of depression of the pseudo clutch pedal 28.

Signals from the accelerator position sensor 32, the shift position sensor 27a, the clutch position sensor 28a, the wheel speed sensor 36, and the rotational speed sensor 38 are input to the control device 50. The control device 50 processes these signals, and calculates a motor torque instruction value to be used for PWM control of the inverter 42.

The control device 50 includes an automatic mode and a manual mode as control modes, as in the first configuration example discussed above. The automatic mode is programmed to continuously vary an output of the electric motor 44 according to an operation of the accelerator pedal 22. On the other hand, the manual mode is a control mode for driving the battery electric vehicle 10 as an MT vehicle. The manual mode is programmed to vary the output and the output characteristics of the electric motor 44 for an operation of the accelerator pedal 22 according to operations of the pseudo clutch pedal 28 and the pseudo shift lever (pseudo shift device) 27. That is, the manual mode is a control mode in which the output of the electric motor 44 can be varied in response to driving operations of vehicle constituent elements other than the accelerator pedal 22 or the brake pedal.

The vehicle model of the manual mode torque calculation unit 56 is the same as that illustrated in FIG. 15. However, the virtual clutch operation amount Pc is replaced with the amount of depression of the pseudo clutch pedal 28 detected by the clutch position sensor 28a. In addition, the virtual gear position GP is determined according to the position of the pseudo shift lever 27 detected by the shift position sensor 27a.

## Claims

1. A vehicle management system (100) to be applied to a battery electric vehicle (10) configured to use an electric motor (44) as a power unit for travel, the battery electric vehicle (10) including a simulation mode in which a simulation target is simulated, and the simulation target including at least either of a driving sound of a virtual mobile body and driving characteristics of a virtual vehicle, the vehicle management system (100) comprising one or more processors (101) configured to:
calculate driving proficiency of a driver that drives the battery electric vehicle (10) in the simulation mode; and
change options for the simulation target according to the driving proficiency.

2. The vehicle management system (100) according to claim 1, wherein the one or more processors (101) are configured to increase the options for the simulation target as the driving proficiency becomes higher.

3. The vehicle management system (100) according to claim 1 or 2, wherein the simulation target includes the driving sound of the virtual mobile body, and the one or more processors (101) are configured to:
generate a pseudo driving sound that simulates the driving sound of the virtual mobile body; and
output the pseudo driving sound through a speaker mounted on the battery electric vehicle (10).

4. The vehicle management system (100) according to claim 3, wherein the pseudo driving sound of the virtual mobile body is a pseudo engine sound that simulates an engine sound of an engine-driven automobile.

5. The vehicle management system (100) according to any one of claims 1 to 4, wherein the driving proficiency is calculated based on at least one of a duration of use of the simulation mode, a distance of travel in the simulation mode, and a frequency of use of the simulation mode.

6. The vehicle management system (100) according to any one of claims 1 to 5, wherein the simulation target includes the driving characteristics of the virtual vehicle, the driving characteristics of the virtual vehicle are torque characteristics of a manual transmission (MT) vehicle, and the simulation mode includes a manual mode in which the torque characteristics of the MT vehicle are simulated.

7. The vehicle management system (100) according to claim 6, wherein the battery electric vehicle (10) includes an accelerator pedal and a sequential shifter, and the battery electric vehicle (10) is configured to vary output characteristics of the electric motor (44) for an operation of the accelerator pedal according to a shift operation of the sequential shifter in the manual mode.

8. The vehicle management system (100) according to claim 6, wherein the battery electric vehicle (10) includes an accelerator pedal, a pseudo clutch pedal, and a pseudo shift device, the pseudo clutch pedal is operated when operating the pseudo shift device, and the battery electric vehicle (10) is configured to vary an output of the electric motor (44) for an operation of the accelerator pedal according to an operation of the pseudo clutch pedal and an operation of the pseudo shift device in the manual mode.

9. The vehicle management system (100) according to any one of claims 6 to 8, wherein the driving proficiency is calculated based on at least one of a duration of use of the manual mode, a distance of travel in the manual mode, a frequency of use of the manual mode, and a number of shift operations in the manual mode.

10. The vehicle management system (100) according to any one of claims 1 to 9, wherein the one or more processors (101) are configured to select one specified by the driver, from among the options for the simulation target.

11. A battery electric vehicle (10) configured to use an electric motor (44) as a power unit for travel, the battery electric vehicle (10) comprising one or more processors (101) configured to:
simulate a simulation target that includes at least either of a driving sound of a virtual mobile body and driving characteristics of a virtual vehicle in a simulation mode;
calculate driving proficiency of a driver that drives the battery electric vehicle (10) in the simulation mode; and
change options for the simulation target according to the driving proficiency.
